# EUROPÄISCHE PATENTSCHRIFT

(11) **EP 1 150 929 B1**
(45) Veröffentlichungstag und Bekanntmachung des Hinweises auf die Patenterteilung: **10.03.2004**
(21) Anmeldenummer: 99963450.4
(22) Anmeldetag: 09.12.1999
(51) Int. Cl.: C04B 16/08, B07B 13/11

(54) **VERFAHREN ZUR HERSTELLUNG VON LEICHTBETON, KÖRNIGER ZUSCHLAGSTOFF FÜR DIESEN UND VORRICHTUNG ZUR KLASSIERUNG VON KÖRNIGEM MATERIAL**
METHOD FOR PRODUCING LIGHTWEIGHT CONCRETE, A GRANULAR AGGREGATE FOR THE SAME AND A DEVICE FOR SCREENING GRANULAR MATERIAL
PROCEDE DE FABRICATION DE BETON LEGER, GRANULATS POUR CE BETON ET DISPOSITIF DE CRIBLAGE DE LA MATIERE GRANULEE

(30) Priorität: 11.12.1998 DE 19857130
(43) Veröffentlichungstag der Anmeldung: 07.11.2001
(73) Patentinhaber: Fraunhofer-Gesellschaft zur Förderung der angewandten Forschung e.V., 80686 München (DE); Universität Karlsruhe, 76128 Karlsruhe (DE)
(72) Erfinder: GEISSLER, Adam, D-76689 Karlsdorf-Neuthard (DE); BARTH, Martin, D-74889 Sinsheim (DE); BIEDERMANN, Udo, D-76646 Bruchsal (DE); ANGERER, Gerhard, D-76228 Karlsruhe (DE); MARSCHEIDER-WEIDEMANN, Frank, D-76344 Eggenstein (DE); MÜLLER, Harald, D-76275 Ettlingen (DE); GARRECHT, Harald, D-76297 Stutensee-Staffort (DE); HEROLD, Gunther, D-76228 Karlsruhe (DE)
(86) Internationale Anmeldenummer: PCT/EP1999/009690
(87) Internationale Veröffentlichungsnummer: WO 2000/035825

(56) Entgegenhaltungen:
- EP-A- 0 819 662
- WO-A-86/00031
- WO-A-88/05765
- DE-A- 1 471 468
- DE-A- 2 125 719
- DE-A- 4 134 759
- US-A- 4 543 180
- US-A- 5 427 253

## Beschreibung

Die Erfindung betrifft ein Verfahren zur Herstellung von Leichtbeton gemäß dem Oberbegriff des Anspruchs 1. Darüber hinaus betrifft die Erfindung eine Vorrichtung zum Trennen von körnigem Material in verschiedene Kornformfraktionen gemäß Oberbegriff des Anspruchs 14.

Beton besteht aus einem erhärteten Gemisch aus Zement, Wasser und Betonzuschlag und kann gegebenenfalls Betonzusatzmittel und Betonzusatzstoffe enthalten. Je nach Trockenrohdichte wird zwischen Leichtbeton (unter 2,0 kg/dm³), Normalbeton (2,0 bis 2,8 kg/dm³) und Schwerbeton (über 2,8 kg/dm³) unterschieden.

Zur Herstellung von Leichtbeton werden in der Regel Betonzuschläge auf der Basis von Feinsand, Lavakies und - sand, Bimsstein, Blähton, Blähschiefer, Blähglimmer und Blähperlit, Kieselgur, Tuff, aber auch Flugasche, Müllschlacke und Holzfasern verwendet. Nachteilig bei der verbreiteten Verwendung von natürlichen mineralischen Betonzuschlägen ist insbesondere, daß deren Vorkommen begrenzt sind und der mit massiven Eingriffen in die Natur verbundene Übertageabbau zunehmend mit ökologischen Belangen in Konflikt gerät. Darüber hinaus stellt die schlechte Pumpfähigkeit von mit porösen mineralischen Zuschlägen hergestelltem Leichtbeton eine Beschränkung der technischen Einsatzmöglichkeiten dar.

Weiterhin sind Betonzuschläge auf der Basis von Kunststoffen bekannt, wobei vornehmlich Schaumkunststoffe verwendet werden, um ein poröses Produkt mit guten wärmeund schalldämmenden Eigenschaften zu erzielen. Derartige Betone werden beispielsweise zur Kerndämmung mehrschaliger Außenmauern von Gebäuden oder als Schallschutzelemente für Straßen und Autobahnen verwendet. Nachteilig bei solchen meist porösen Betonen ist einerseits deren geringe Druckfestigkeit von in der Regel maximal 2 bis 3 N/mm², sowie andererseits ein mehr oder minder ausgeprägtes Quellen und Schwinden von aus derartigen Betonen hergestellten Bauteilen.

Darüber hinaus ergibt sich aus der Forderung nach Schonung der Mineralölressourcen, aus denen die Grundstoffe der Kunststoffsynthese gewonnen werden, die Notwendigkeit nach einem Recycling insbesondere synthetischer Polymere. Diese Notwendigkeit besteht um so mehr, als bei der häufig einzigen Möglichkeit der Abfallbeseitigung, nämlich der Verbrennung, synthetische Kunststoffe erhebliche CO₂-Emissionen, häufig begleitet von toxischen Emissionen, erzeugen. Aus der DE 43 30 084 C1 ist es bekannt, Kunststoffabfälle zu einem Granulat zu verarbeiten und dieses als Zuschlagstoff für Beton zu verwenden. Aus der EP-A-0 819 662 ist es bekannt, Leichtbeton mit einem Zuschlag aus zermahlenem Polystyrolabfall herzustellen, wobei der Polystyrolzuschlag nach verschiedenen Korngrößenfraktionen klassiert und beigemischt wird. Gemäß der DE-A-1 471 468 werden als Zuschlag für einen Leichtbeton Polystyrolkügelchen von voreingestellter Körnung verwendet, die eine geschlossene Oberfläche aufweisen. Gemäß der WO-A-88/05765 werden zur Herstellung eines Leichtbetons Polystyrolabfälle eingesetzt, die eine durch Anschmelzen versiegelte Oberfläche aufweisen.

Es hat sich gezeigt, daß das durch Kunststoffzuschläge aus Kunststoffabfällen verursachte Quellen von Frischbeton im wesentlichen durch Verschmutzungen der Kunststoffe, wie beispielsweise Aluminium, hervorgerufen wird, welche im alkalischen Milieu des Betons mit diesem unter Gasentwicklung reagieren. Aus diesem Grunde wird mit Aluminium verunreinigter Kunststoffmüll einem Waschvorgang in alkalischer Lösung unterzogen, um die im Beton ablaufenden chemischen Reaktionen vorwegzunehmen und die Kunststoffabfälle zu inertisieren. Durch die Inertisierung werden die Verschmutzungen aus den Kunststoffabfällen entfernt, wobei in den Kunststoffabfällen enthaltenes Aluminium in Lösung geht, so daß nach Zusetzen der inertisierten Kunststoffabfälle in den Frischbeton kein reaktionsfähiges Aluminium mehr vorliegt. Die Güte des Leichtbetons und dessen Verarbeitbarkeit sind jedoch in vielen Fällen nicht ausreichend.

Die DE-A-41 34 759 beschreibt eine zur Ebene geneigte Förderbandanordnung, mittels der Partikel nach ihrer Kornform sortiert werden können, wobei insbesondere runde Partikel von Partikeln mit unregelmäßiger Form getrennt werden. In der US-A-5 427 253 ist ein Rüttelförderband gezeigt, das ebenfalls zur Trennung von Partikeln nach Maßgabe ihrer Kornform geeignet ist. In beiden Fällen ist der konstruktive Aufwand jedoch relativ hoch.

Der Erfindung liegt die Aufgabe zugrunde, ein Verfahren zur Herstellung von Leichtbeton vorzuschlagen, dem Kunststoffzuschläge in körniger Form zugesetzt werden und der eine hohe Güte aufweist und einfach zu verarbeiten ist. Darüber hinaus soll eine Vorrichtung zum Trennen von körnigem Material in verschiedene Kornformfraktionen zur einfachen Durchführung eines derartigen Verfahrens geschaffen werden.

Der verfahrenstechnische Teil der Erfindungsaufgabe wird durch ein Verfahren mit den Merkmalen des Anspruchs 1 gelöst. Dabei werden die körnigen Kunststoffzuschläge vor dem Inertisieren in verschiedene Korngrößenfraktionen klassiert, aus denen zumindest eine für die angestrebten Betoneigenschaften gewünschte Korngrößenfraktion zur weiteren Behandlung ausgewählt wird und die körnigen Zuschläge der ausgewählten Korngrößenfraktion nach der Kornform klassiert werden.

Die Erfindung geht von dem Grundgedanken aus, die körnigen Kunststoffzuschläge nicht in beliebiger Korngrößenverteilung zuzusetzen, sondern sie zunächst in verschiedene Korngrößenfraktionen zu klassieren und aus diesen eine oder mehrere auszuwählen. Anschließend werden die körnigen Kunststoffzuschläge wenigstens einer Korngrößenfraktion in verschiedene Kornformfraktionen getrennt, wobei beispielsweise die Korngrößenfraktionen mit einem Korndurchmesser zwischen ca. 4 und 8 mm und einem Korndurchmesser zwischen ca. 8 und 16 mm in Kornformfraktionen mit im wesentlichen runden Körnern und mit im wesentlichen eckigen, d.h. flachen Körnern getrennt werden. Das Mischungsverhältnis, in dem diese Kornformfraktionen dem Beton zugesetzt werden, hat Einfluß auf die Eigenschaften des Betons. Durch das Klassieren nach Korngröße einerseits sowie das Trennen nach Kornform andererseits ist es somit möglich, einen individuell an seinen Verwendungszweck angepaßten Leichtbeton herzustellen. In überwiegender Masse werden die runden Körner der genannten Korngrößenfraktionen für die Herstellung des Leichtbetons verwendet. Die gedrungen-isometrische Kornform bei vorzugsweise geschlossenzelligem Korn mit rauher Oberfläche begünstigt die gute Verarbeitbarkeit des Frischbetons, während eckiges, d.h. folien- oder schnipselartiges Zuschlagkorn die Verarbeitbarkeit des Frischbetons negativ beeinflußt, da durch Anordnung der eckigen, flachen und somit plattigen Zuschlagkörner parallel zur Betonoberfläche ein anisotroper Festbeton entsteht. Die Zumischung geringer Anteile von eckigen Kunststoffkörnern in der Größenordnung von vorzugsweise 5 Masse-% bis 30 Masse-% des Rundkornanteils ist möglich, ohne die Verarbeitbarkeit des Betons signifikant zu verschlechtern. Der für den Beton erforderliche Feinzuschlag wird als Sand mit einer Korngröße von 0 bis 2 mm zugegeben. Zusammen mit der Rundkornfraktion mit einer Korngröße von 4 bis 8 mm, die einen Anteil von vorzugsweise 20 bis 30 Masse-% bezogen auf den Gesamtzuschlag im Beton vertreten ist, resultiert als Sieblinie für die Zuschlagstoffe eine Ausfallkörnung. Mit solchen Mischungen können bei wirtschaftlichem Zementeinsatz Trockenrohdichten zwischen 1,6 und 1,7 kg/dm³ bei Druckfestigkeiten von 20 N/mm² err werden. Ein weiterer Vorteil des erfindungsgemäßen Verfahrens besteht darin, daß aus einem entsprechend hergestellten Beton der Kunststoff- Zuschlag praktisch vollständig durch mechanische Aufbereitungsverfahren, insbesondere Brechen und Sieben, zurückgewonnen werden kann. Die ausgewählten Kunststoffzuschläge werden durch chemische Behandlung mit Säuren oder Laugen inertisiert.

Dabei ist in bevorzugter Ausführung vorgesehen, daß die körnigen Kunststoffzuschläge vor dem Zusetzen z.B. mittels Sieben, insbesondere Rüttelsieben, in verschiedene Korngrößenfraktionen klassiert werden. Die Kunststoffzuschläge können beispielsweise in Korngrößenfraktionen mit einem Korndurchmesser von kleiner als ca. 2 mm, einem Korndurchmesser zwischen ca. 2 und 4 mm, einem Korndurchmesser zwischen ca. 4 und 8 mm, einem Korndurchmesser von 8 bis 16 mm und einem Korndurchmesser von größer als ca. 16 mm klassiert werden.

Es hat sich gezeigt, daß für die Festigkeit eines Kunststoffzuschläge in körniger Form enthaltenden Betons bei möglichst geringer Trockenrohdichte und konstantem Zementgehalt insbesondere die Korngröße der Kunststoffpartikel maßgeblich ist, wobei die Verwendung von Kornfraktionen mit einer Korngröße zwischen 4 und 8 mm und zwischen 8 und 16 mm die besten Festigkeitswerte eines solchen Betons liefert. Während die Korngrößenfraktion mit einem Korndurchmesser von größer als ca. 16 mm beispielsweise einem Agglomerator oder einem Schredder übergeben und anschließend erneut klassiert werden kann, kann die Fraktion mit einem Korndurchmesser von kleiner als ca. 2 mm z.B. zur Herstellung von Betonen eingesetzt werden, bei denen geringere Anforderungen hinsichtlich ihrer Eigenschaften gestellt werden, oder diese Korngrößenfraktion wird anderweitig verwertet, z.B. extrudiert. Nach Kornvergröberung kann erneut eine Klassierung nach Korngröße vorgenommen werden.

Mit dem erfindungsgemäßen Verfahren können gefügedichte Leichtbetone mit einer Trockenrohdichte von insbesondere 1,7 bis 2,0 kg/dm³ und Festigkeiten von vorzugsweise 20 N/mm² bis 25 N/mm² hergestellt werden, welche eine gute Verarbeitungs- und Pumpfähigkeit aufweisen und nicht oder nur wenig quellen. Aus einem solchen Beton hergestellte Bauteile zeichnen sich folglich durch eine hinreichend hohe Festigkeit, ein geringes Gewicht und eine gute Dauerhaftigkeit bzw. Maßhaltigkeit aus und können z.B. als Fertigteile im Hoch- und Tiefbau, Landschafts-, Gartenund Straßenbau eingesetzt werden.

Das erfindungsgemäße Verfahren erschließt gebrauchten Kunststoffen, wie z.B. Kunststoffagglomeraten aus gemischten Kunststoffabfällen, eine hochwertige Verwertungsalternative, die beträchtliche Mengen aufzunehmen vermag und zudem keine Sortenreinheit der eingesetzten Kunststoffabfälle verlangt. Es können beispielsweise auch aus Folienabfällen stammende Kunststoffe, welche häufig eine Kaschierung aus Aluminium aufweisen, eingesetzt werden, wobei diese z.B. in einem dem erfindungsgemäßen Verfahren vorgeschalteten Verfahrensschritt verschmolzen und agglomeriert und zerkleinert werden können.

Zur Trennung des körnigen Kunststoffmaterials in verschiedene Kornformfraktionen, wie in Kornformfraktionen mit in wesentlichen runden Körnern und mit im wesentlichen eckigen,. flachen Körnern, ist erfindungsgemäß eine Vorrichtung mit den Merkmalen des Anspruchs 14 vorgesehen. Dabei sind eine rotierbare Trommel mit rauher Innenfläche (Körnung < 100) zur Aufnahme des körnigen Materials und eine innenseitig der Trommel in deren mittlerem Bereich angeordnete, im wesentlichen horizontale Sammeleinrichtung für die bei rotierender Trommel an deren Innenwand durch Reibungskräfte anhaftenden und zur Sammeleinrichtung aufsteigenden Körner vorgesehen. Die Trennung in Kornformfraktionen mit im wesentlichen runden und mit im wesentlichen eckigen Körnern erfolgt bei Rotation der Trommel derart, daß die eckigen Körner aufgrund der Haftreibung an der rauhen Innenfläche der Trommel durch deren Rotation entlang der Trommelwand nach oben getragen werden und beim Lösen von der Trommelwand von dort auf die innenseitig der Trommel angeordnete Sammeleinrichtung fallen. Die runden Körner hingegen sammeln sich aufgrund ihrer wesentlich geringeren Haftreibung innenseitig der rotierenden Trommel unterhalb der Sammeleinrichtung an.

Um die Kornformfraktionen aus der Vorrichtung auszutragen, ist in bevorzugter Ausführung vorgesehen, daß die Längsmittelachse der Trommel geneigt angeordnet ist, so daß bei Beschickung der Vorrichtung am erhöht angeordneten Trommelende die runde Kornformfraktion am tieferen Ende der Trommel kontinuierlich ausgetragen wird. In weiterhin bevorzugter Ausführung ist vorgesehen, daß die Sammeleinrichtung ein Förderband oder dgl. aufweist, so daß auch die eckige Kornformfraktion kontinuierlich aus der Vorrichtung ausgetragen wird. Zum Antrieb der Trommel können z.B. rotierbare Antriebsrollen vorgesehen sein, auf denen die Trommel gelagert sein kann.

Die Zugabe von Körnern der Korngrößenfraktion von 0 bis 2 mm sowie von 2 bis 4 mm als Teilsubstitution des Grobkorns der Korngrößenfraktion von 4 bis 8 mm zum Beton ist möglich, jedoch nicht sinnvoll, da sich dadurch der Zementbedarf erhöht, wenn das angegebene Festigungsniveau erhalten werden soll. Als weiterer Nachteil bei Verwendung dieser Korngrößenfraktionen, insbesondere der Korngrößenfraktion von 0 bis 2 mm, ist festzuhalten, daß eine wirtschaftlich vertretbare Rückgewinnung der Kunststoffe aus dem Betongefüge nicht möglich ist.

Um den pH-Wert des beim Anmischen von Frischbeton eingestellten alkalischen Milieus nicht abzusenken, ist in bevorzugter Ausführung vorgesehen, daß zum Inertisieren der Kunststoffabfälle Alkali- und/oder Erdalkalihydroxidlösungen, insbesondere Natronlauge, verwendet werden. Selbstverständlich können auch Gemische der genannten Hydroxidlösungen eingesetzt werden.

Ebenso ist es möglich, daß zum Inertisieren der Kunststoffabfälle anorganische Säuren verwendet werden, wobei vorzugsweise nicht oxidierende Säuren, wie Säuren auf der Basis von Halogenwasserstoffen, z.B. Salzsäure, verwendet werden.

Die Dichte und die Temperatur eines verwendeten Säureoder Laugenbades, die Dauer der Inertisierung sowie die Prozeßführung in einem bewegten oder ruhenden Bad kann individuell auf die Korngröße der verwendeten Kunststoffabfälle, die darin enthaltenen Verunreinigungen und deren Zugänglichkeit für einen chemischen Angriff abgestimmt werden. Untersuchungen haben gezeigt, daß ein bei Raumtemperatur über einen Zeitraum von 8 bis 12 Stunden mit einer Lauge mit der Dichte zwischen 1,1 und 1,2 kg/dm³ inertisierter Kunststoff nach der Zugabe zu dem Frischbeton nicht mehr zu dessen Quellen führt. Dabei ist es von wirtschaftlichem Vorteil, den Verfahrensschritt der Klassierung vor dem Verfahrensschritt der Inertisierung durchzuführen, da auf diese Weise der zu inertisierende Volumenstrom an Kunststoffabfällen drastisch reduziert ist.

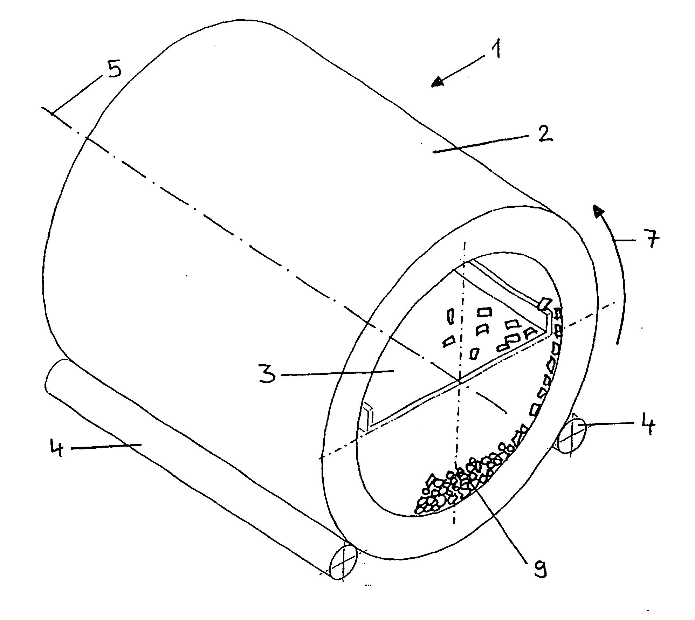

Nachstehend ist eine bevorzugte Ausführung einer Vorrichtung zum Trennen von körnigem Material in verschiedene Kornformfraktionen, wie in Kornformfraktionen mit im wesentlichen runden Körnern, und mit im wesentlichen eckigen Körnern anhand der Zeichnung näher erläutert. Dabei zeigt die einzige Figur eine perspektivische Ansicht einer erfindungsgemäßen Vorrichtung.

Die dargestellte Vorrichtung 1 weist eine rotierbare Trommel 2 mit rauher Innenfläche zur Aufnahme körnigen Materials 9 sowie eine innenseitig der Trommel 2 in deren mittlerem Bereich angeordnete, im wesentlichen horizontale Sammeleinrichtung 3 für die bei rotierender Trommel 2 an deren Innenwand durch Reibungskräfte anhaftenden, insbesondere für die im wesentlichen eckigen Körner auf. Die Längsmittelachse 5 der Trommel 2 ist geneigt angeordnet, um einen kontinuierlichen Austrag der in der Trommel 2 angereicherten runden Kornformfraktion zu ermöglichen. Die Sammeleinrichtung 3 ist als Förderband ausgebildet, um einen kontinuierlichen Austrag der eckigen Kornformfraktionzu gewährleisten. Die Trommel 2 ist auf Antriebsrollen 4 gelagert, mit denen sie in Richtung des Pfeils 7 rotierbar ist, um für eine Trennung des körnigen Materials 9 nach Kornform aufgrund der unter schiedlichen Reibung zwischen runden bzw. eckigen Körnern und Trommelinnenwand zu sorgen.

## Patentansprüche

1. Verfahren zur Herstellung von Leichtbeton, wobei Kunststoffzuschläge in körniger Form zugesetzt werden, die zumindest teilweise aus Kunststoffabfällen bestehen, wobei die körnigen Kunststoffzuschläge in verschiedene Korngrößenfraktionen klassiert werden, aus denen zumindest eine für die angestrebten Betoneigenschaften gewünschte Korngrößenfraktion zur weiteren Behandlung ausgewählt wird, **dadurch gekennzeichnet, daß** die körnigen Kunststoffzuschläge der ausgewählten Korngrößenfraktionen anschließend in eine Kornformfraktion mit im wesentlichen runden Korn und eine Kornformfraktion mit im wesentlichen eckigen, flachen Korn getrennt werden und daß für den Leichtbeton in überwiegender Masse die runden Körner ausgewählt werden, wobei die ausgewählten Kunststoffzuschläge vor dem Zusetzen durch chemische Behandlung mit Säuren oder Laugen inertisiert werden.

2. Verfahren nach Anspruch 1, **dadurch gekennzeichnet, daß** die Kunststoffzuschläge in Korngrößenfraktionen von kleiner als ca. 2 mm, mit einem Korndurchmesser zwischen ca. 2 und 4 mm, einem Korndurchmesser zwischen ca. 4 und 8 mm einem Korndurchmesser zwischen ca. 8 und 16 mm und einem Korndurchmesser von größer als ca. 16 mm klassiert werden.

3. Verfahren nach Anspruch 1 oder 2, **dadurch gekennzeichnet, daß** für den Leichtbeton im wesentlichen die Korngrößenfraktion mit einem Korndurchmesser zwischen 4 und 8 mm und/oder die Korngrößenfraktion mit einem Korndurchmesser zwischen 8 und 16 mm verwendet werden.

4. Verfahren nach einem der Ansprüche 1 oder 3, **dadurch gekennzeichnet, daß** die Kunststoffzuschläge mittels Sieben, insbesondere Rüttelsieben, klassiert werden.

5. Verfahren nach einem der Ansprüche 1 bis 4, **dadurch gekennzeichnet, daß** die Kunststoffzuschläge aus zumindest 70% im wesentlichen rundem Korn bestehen.

6. Verfahren nach einem der Ansprüche 1 bis 5, **dadurch gekennzeichnet, daß** die körnigen Kunststoffzuschläge eine rauhe, geschlossenzellige Oberfläche besitzen.

7. Verfahren nach einem der Ansprüche 1 bis 6, **dadurch gekennzeichnet, daß** die Inertisierung mit starken Laugen und/oder starken Säuren erfolgt.

8. Verfahren nach einem der Ansprüche 1 bis 7, **dadurch gekennzeichnet, daß** zum Inertisieren Alkali- und/oder Erdalkalihydroxidlösungen verwendet werden.

9. Verfahren nach Anspruch 8, **dadurch gekennzeichnet, daß** Natronlauge verwendet wird.

10. Verfahren nach einem der Ansprüche 1 bis 7, **dadurch gekennzeichnet, daß** zum Inertisierungen anorganische Säuren verwendet werden.

11. Verfahren nach Anspruch 10, **dadurch gekennzeichnet, daß** nicht oxidierende Säuren verwendet werden.

12. Verfahren nach Anspruch 11, **dadurch gekennzeichnet, daß** Säuren auf der Basis von Halogenwasserstoffen, z.B. Salzsäure, verwendet werden.

13. Verfahren nach einem der Ansprüche 1 bis 12, **dadurch gekennzeichnet, daß** Kunststoffagglomerate aus gemischtem Kunststoffabfällen eingesetzt werden.

14. Vorrichtung (1) zum Trennen von körnigem Material in verschiedene Kornformfraktionen, wie in Kornformfraktionen mit im wesentlichen runden Körnern und mit im wesentlichen eckigen Körnern, insbesondere zur Durchführung des Verfahrens nach einem der Ansprüche 1 bis 13, mit einer rotierbaren Trommel (2) mit rauher Innenfläche zur Aufnahme des körnigen Materials (9), und einer innenseitig der Trommel (2) in deren mittlerem Bereich angeordneten horizontalen Sammeleinrichtung (3), der diejenigen Körner (9) zuführbar sind, bei aufgrund ihrer Kornform bei rotierender Trommel (2) an deren Innenwand durch Reibungskräfte anhaften, und mit jeweils einer Austragvorrichtung für die getrennten Kornformfraktionen.

15. Vorrichtung nach Anspruch 14, **dadurch gekennzeichnet, daß** die Längsmittelachse (5) der Trommel (2) geneigt angeordnet ist.

16. Vorrichtung nach Anspruch 14 oder 15, **dadurch gekennzeichnet, daß** die Sammeleinrichtung (3) ein Förderband aufweist.

## Claims

1. Method for producing lightweight concrete, plastic material aggregates being added in granular form, which aggregates comprise at least partially plastic material waste, the granular plastic material aggregates being classified into various grain size fractions, from which at least one grain size fraction, which is desired for the sought-after concrete properties, is selected for further treatment, **characterised in that** the granular plastic material aggregates of the selected grain size fractions are subsequently separated into a grain shape fraction having a substantially round grain and a grain shape fraction having a substantially angular, flat grain and **in that** the round grains are selected as predominant material for the lightweight concrete, the selected plastic material aggregates being inerted before addition by means of chemical treatment with acids or caustic solutions.

2. Method according to claim 1, **characterised in that** the plastic material aggregates are classified into grain size fractions of less than approximately 2 mm, with a grain diameter between approximately 2 and 4 mm, with a grain diameter between approximately 4 and 8 mm, with a grain diameter between approximately 8 and 16 mm and with a grain diameter of greater than approximately 16 mm.

3. Method according to claim 1 or 2, **characterised in that**, for the lightweight concrete, essentially the grain size fractions with a grain diameter between 4 and 8 mm, and/or the grain size fractions with a grain diameter between 8 and 16 mm are used.

4. Method according to one of the claims 1 or 3, **characterised in that** the plastic material aggregates are classified by means of a screens, in particular vibrating screens.

5. Method according to one of the claims 1 to 4, **characterised in that** the plastic material aggregates comprise at least 70% of substantially round grain.

6. Method according to one of the claims 1 to 5, **characterised in that** the granular plastic material aggregates have a rough, closed-cell surface.

7. Method according to one of the claims 1 to 6, **characterised in that** the inerting is effected with strong caustic solutions and/ or strong acids.

8. Method according to one of the claims 1 to 7, **characterised in that** alkali and/or alkaline earth hydroxide solutions are used for inerting.

9. Method according to claim 8, **characterised in that** caustic soda is used.

10. Method according to one of the claims 1 to 7, **characterised in that** inorganic acids are used for inerting.

11. Method according to claim 10, **characterised in that** non-oxidising acids are used.

12. Method according to claim 11, **characterised in that** acids based on hydrogen halides, for example hydrochloric acid, are used.

13. Method according to one of the claims 1 to 12, **characterised in that** plastic material agglomerates made of mixed plastic material waste are used.

14. Device (1) for separating granular material into various grain shape fractions, such as into grain shape fractions having substantially round grains and having substantially angular grains, in particular for implementation of the method according to one of the claims 1 to 13, with a rotatable drum (2) with a rough inner face for receiving the granular material (9), and with a horizontal collection device (3) which is disposed on the inner side of the drum (2) in the central region thereof, to which those grains (9) can be supplied, in the case of which adhesion takes place by means of frictional forces during rotation of the drum (2) on the inner wall thereof due to their grain shape, and with a discharge device respectively for the separated grain shape fractions.

15. Device according to claim 14, **characterised in that** the longitudinal central axis (5) of the drum (2) is disposed in an inclined manner.

16. Device according to claim 14 or 15, **characterised in that** the collection device (3) has a conveyor belt.

## Revendications

1. Procédé de fabrication de béton léger selon lequel on ajoute des additifs de matière plastique à l'état de granulats, ces additifs étant formés au moins en partie de déchets de matière plastique, les additifs de matière plastique à l'état de granulats étant classés suivant différentes fractions de tailles de grains parmi lesquelles on sélectionne au moins une fraction de taille de grain souhaitée pour obtenir les propriétés recherchées du béton, pour la suite du traitement,
**caractérisé en ce que**
les additifs de matière plastique à l'état de grains des fractions de granulométrie choisies sont ensuite séparés en fractions de forme de grains avec des grains essentiellement ronds et une fraction de forme de grain avec des grains essentiellement plats, anguleux, et
pour le béton léger on sélectionne principalement dans la masse les grains ronds, les additifs de matière plastique, sélectionnés étant neutralisés avec des acides ou des lessives par traitement chimique avant d'être ajoutés.

2. Procédé selon la revendication 1,
**caractérisé en ce que**
les additifs de matière plastique sont classés en des fractions de taille de grains inférieures à environ 2 mm, avec un diamètre de grain compris entre environ 2 et 4 mm, un diamètre de grain compris entre environ 4 et 8 mm, un diamètre de grain compris entre environ 8 et 16 mm et un diamètre de grain supérieur à environ 16 mm.

3. Procédé selon la revendication 1 ou 2,
**caractérisé en ce que**
pour le béton léger on utilise principalement la fraction de taille de grain ayant un diamètre de grain compris entre 4 et 8 mm et/ou une fraction de dimension de grain avec un diamètre de grain compris entre 8 et 16 mm.

4. Procédé selon l'une des revendications 1 ou 3,
**caractérisé en ce qu'**
on classe les additifs de matière plastique par tamisage, notamment par tamisage vibrant.

5. Procédé selon l'une des revendications 1 à 4,
**caractérisé en ce que**
les additifs de matière plastique se composent au moins à 70 % de grains essentiellement ronds.

6. Procédé selon l'une des revendications 1 à 5,
**caractérisé en ce que**
les additifs de matière plastique à l'état de grains ont une surface rugueuse à cellules fermées.

7. Procédé selon l'une des revendications 1 à 6,
**caractérisé en ce que**
la neutralisation est effectuée avec une lessive forte et/ou un acide fort.

8. Procédé selon l'une des revendications 1 à 7,
**caractérisé en ce que**
pour la neutralisation on utilise des solutions d'hydroxydes alcalins et/ ou alcalinoterreux.

9. Procédé selon la revendication 8,
**caractérisé en ce qu'**
on utilise de la lessive de soude.

10. Procédé selon l'une des revendications 1 à 7,
**caractérisé en ce que**
pour neutraliser on utilise des acides anorganiques.

11. Procédé selon la revendication 10,
**caractérisé en ce qu'**
on utilise des acides non oxydants.

12. Procédé selon la revendication 11,
**caractérisé en ce qu'**
on utilise des acides à base d'hydrocarbures halogénés comme par exemple de l'acide chlorhydrique.

13. Procédé selon l'une des revendications 1 à 12,
**caractérisé en ce qu'**
on utilise des agglomérats de matière plastique composés de déchets mélangés de matière plastique.

14. Dispositif (1) pour séparer une matière granuleuse en différentes fractions de grains telles que des fractions de forme de grains essentiellement ronds et des grains essentiellement anguleux, en particulier pour la mise en oeuvre du procédé selon l'une des revendications 1 à 13 comportant un tambour rotatif (2) à surface intérieure rugueuse pour recevoir la matière à l'état de grains (9) et une installation collectrice (3), horizontale, prévue sur le côté intérieur du tambour (2) dans la zone médiane, et qui reçoit les grains (9) dont la forme, lorsque le tambour (2) tourne, les fait accrocher à la paroi intérieure par des forces d'accrochage et avec chaque fois un dispositif d'évacuation pour les fractions de forme de grains séparées.

15. Dispositif selon la revendication 14,
**caractérisé en ce que**
l'axe du plan longitudinal (5) du tambour (2) est incliné.

16. Dispositif selon la revendication 14 ou 15,
**caractérisé en ce que**
l'installation collectrice (3) comporte une bande transporteuse.
